# EUROPEAN PATENT SPECIFICATION

(11) **EP 0 378 443 B1**
(45) Date of publication and mention of the grant of the patent: **02.11.1994**
(21) Application number: 90300389.5
(22) Date of filing: 12.01.1990
(51) Int. Cl.: G11B 11/00

(54) **Method for recording and reproducing information**
Verfahren zur Aufnahme und Wiedergabe von Information
Méthode pour l'enregistrement et la reproduction d'information

(30) Priority: 13.01.1989 JP 7106/89
(43) Date of publication of application: 18.07.1990
(73) Proprietor: SHARP KABUSHIKI KAISHA, Osaka 545 (JP)
(72) Inventor: Wada, Katsuo, Yao-shi, Osaka (JP); Minami, Etsuji, Nara-shi, Nara-ken (JP); Ohta, Kenji, Kitakatsuragi-gun, Nara-ken (JP)
(74) Representative: Brown, Kenneth Richard

(56) References cited:
- EP-A- 0 186 813
- DE-A- 3 724 617
- US-A- 4 888 758
- TECHNICAL DIGEST, WESTERN ELECTRIC, no. 75, September 1984, NEW YORK, U.S.A.page 13; J.S.COURTNEY-PRATT: 'High capacity memories using short-wavelength or electron beam irradiation of the storage medium'
- PATENT ABSTRACTS OF JAPAN vol. 9, no. 97 (P-352)(1820) 26 April 1985 & JP-A-59-221 846
- PATENT ABSTRACTS OF JAPAN vol. 9, no. 273 (P-401)(1996) 30 October 1985 & JP-A-60-117 434
- PATENT ABSTRACTS OF JAPAN vol. 9, no. 97 (P-352)(1820) 26 April 1985 & JP-A-59-221 847

## Description

The present invention relates to a method for recording and reproducing information utilizing a work function variation of a recording medium to record information, and a photoelectric or thermoelectric effect to reproduce information.

There have been proposed the following methods for recording and reproducing information:
(1) A method for magnetically recording and reproducing information wherein portions being locally magnetized in a predetermined direction on a magnetic recording medium are formed by means of a magnetic head to record information, while the information is reproduced by detecting an arrangement pattern in the magnetized direction by means of the magnetic head.
(2) A method for optically recording and reproducing information wherein a pit pattern having microscopic unevenness is formed on the surface of a recording medium to record information, while the information is reproduced by applying a light beam onto the surface of the recording medium and detecting the pit pattern based on the intensity of the reflected light.
(3) A method for magneto-optically recording and reproducing information wherein heat is generated by applying a light beam onto a magneto-optic recording medium to which a magnetic field is being applied, which functions to locally lower coercivity of the medium whereby portions being magnetized in a predetermined direction are formed on the basis of the magnetic field to record information, while the information is reproduced by applying a light beam onto the magneto-optic recording medium and then detecting the arrangement pattern in the magnetized direction on the basis of the difference in angle of the oscillating axis, for example, Kerr effect of the reflected light.

However, many drawbacks have existed in the conventional methods mentioned above. The method for magneto-optically recoring and reproducing information, for example, requires a specific magnetic material having a low coercivity and a high residual magnetic flux density and at the same time a low thermal conductivity for the magneto-optic recording medium. Accordingly, there is a shortcoming that materials suitable for the recording medium are considerably limited. On the other side, when information is reproduced, the magnetic method requires a magnetism to electric current conversion, the optical method requires a light to electric current conversion, and the magneto-optical method requires a light to electric current conversion. Therefore, processing of regenerative signals becomes complicated thereby suffering from noise influence.

There is another known recording method in which a particle beam is irradiated onto a recording medium to implant or stick the particle (element) thereof to the recording medium for generating a composition change thereof, whereby recording can be performed (refer to Japanese Unexamined Patent Application No. SHO 58(1983)-222453).

However, in order to erase information recorded by utilizing the composition change in such a method, it is necessary to etch the surface of the recording medium by applying an electron, ion, or neutral particle beam thereto, to sputter-etch the overall surface thereof for restoring the original composition state, or to heat the recording medium to evaporate the particle stuck to surface thereof or to diffuse it thereinto. This results in such a drawback that the recording medium will deteriorate by repeatedly performing the recording-erasing process.

An object of the invention is to provide a method for recording and reproducing information being free from the problems mentioned above.

JP-A-59-221846 discloses an electron beam recording and reproducing device which employs a recording disc comprising a silicon wafer coated with an aluminium film. Information is recorded on the disc by exposing the disc to an electron beam which is driven according to an input digital information signal. In this manner, openings which expose the silicon wafer are selectively formed in the aluminium film according to the information signal. The recorded information is reproduced from the disc by exposing the disc to an electron beam of lower intensity, and detecting secondary electrons, reflected electrons, X-rays, fluorescence or phosphorence radiated from the disc. The detection of information is thus dependent upon the effect of the reproducing electron beam being incident upon different materials of the disc, i.e. the silicon wafer where an opening is formed and the aluminium film elsewhere.

JP-A-60-117434 discloses an electron beam recording and reproducing device which employs a recording disc having a thermally fusible non-conductive layer (cellulose acetate) formed over a conductive layer (aluminium). Information is recorded on the disc by exposing the disc to an electron beam to locally fuse the non-conductive layer thereby selectively forming openings therein which expose the underlying aluminium layer according to an information signal. The recorded information is reproduced from the disc by exposing the disc to an electron beam of lower intensity, and detecting a current through the conductive layer. The detection of information is thus dependent upon the effect of the reproducing electron beam being incident upon different materials of the disc, i.e. the aluminium film where an opening is formed and the cellulose acetate layer elsewhere.

This invention provides a method for recording and reproducing information comprising:
irradiating an energy beam onto a recording medium, the recording medium being made of a material whose work function can vary according to a structural change thereof caused by the irradiation of the energy beam, to locally vary a work function of said medium so as to record a distribution pattern of portions of the medium whose work function is varied and portions of the medium whose work function is not varied, said distribution pattern corresponding to the information to be recorded;
detecting the distribution pattern on the basis of a difference in photoelectric or thermoelectric effect between the work function varied portions of the medium and the work function non-varied portions of the medium; and
reproducing the recorded information from said detected difference.

According to the method for recording and reproducing information of the invention, the recording medium does not require specific magnetic or optical properties which have been indispensable in a conventional method whereby selection of a material for the medium can be made in a larger range so that it becomes possible to improve the productivity and lower the production cost of an information recording and reproducing device to which the method of the invention is applied.

Further, since reproducing is performed on the basis of the difference in photoelectric effect or thermoelectric effect, that is, on the basis of the amount of electrons emitted from the recording medium, the problem of noise which has occurred frequently upon converting physical signals in the conventional method can be overcome or reduced.

In addition, selecting a material whose work function can reversibly vary makes it possible to repeatedly perform the recording-reproducing process in a simplified manner without deterioration of the recording medium.

It should be noted that when a device laminated with a conductive layer capable of directly detecting a photoelectron or thermoelectron as electric current from the aforesaid recording medium is used in the method of the invention, reproducing can be performed in a more simplified manner without using a separate detector such as a photomultiplier or the like.

Figs. 1 through 13 illustrate embodiments of the invention.

Fig. 1(a) is an explanatory view showing a reproducing principle.

Fig. 1(b) is a graph showing a variation of detected current in relation to Fig. 1(a).

Figs. 2 through 4 are explanatory views showing recording principles, respectively.

Figs. 5 through 8 are explanatory views showing reproducing principles, respectively.

Figs. 9 through 12 are sectional views illustrating respectively devices for recording and reproducing information.

Fig. 13(a) is an explanatory view showing a state of the device shown in Fig. 12 when the device is subjected to a laser beam.

Fig. 13(b) is a graph showing a variation of detected current and corresponding bits in relation to Fig. 13(a).

The recording medium used in the invention consists of a material whose structure can be changed by irradiation of an electromagnetic wave such as a visible radiation, an ultraviolet ray, an infrared ray, an X ray or the like, or of an electron beam so that work function thereof varies. The structural change in this case means a microscopic change in phase structure without substantially changing the composition, and includes, for example,a change of crystalline structure, a generation of defective portion, and the like.

Such a material suitable to be used for the recording medium includes: an alloy made of more than two kinds of metals (B, C, N, P, or S may be included) selected from, for example, Li, Be, Al, Si, Ti, V, Cr, Mn, Fe, Co, Ni, Cu, Zn, Y, Nb, Mo, Te, Pd, Ag, Ta, W, Ir, Pt, Au, Hg, Tb, Dy, Ho, or Th; a ceramic made of Fe₂O₃, TiO, ThO₂, MoSi₂, SnO₂, ZrO₂, LiTaO₃, Y₃Al₅O₈, Y₃Fe₅O₁₂, BaTiO₃, KTaO₃, LiNbO₃, Ba₂NaNb₅O₁₅, Bi₁₂GeO₂₀, or the like; and a semiconductor made of Si, Ge, AlP, GaP, GaAs, InP, ZnSe, or the like.

Among them, it is preferable to use a material whose structure can reversibly change. An example of such a material is a Te alloy or an In alloy in which crystal-amorphous phase change can occur reversibly. A preferable example of the Te alloy is that made of Te and one or more materials selected from Se, Sb, As, Ge, Bi, and In. Such Te alloys include TeSe, TeSb, TeSbAs, TeGeSb, TeGeAs, TeSbIn, TeBi, or the like. On the other hand, preferable In alloys, which are made of In and one or more materials selected from Se, Sb, Tl, and Co, include InSe, InSeTlCo, or the like.

The aforesaid materials usable for the recording medium may be prepared by a known method such as a melt growth, sintering, sputtering or chemical vapour deposition method.

According to the invention, recording, reproducing, and erasing information can be performed by irradiation of the aforesaid electromagnetic wave or electron beam. This irradiation can be effected in an atmospheric air or a specific gas such as N₂, O₂, H₂, He, Ne, Ar, Kr, HCl, HF, SiH₄, AlCl₃, or the like, or in a vacuum. Each of the recording, reproducing, and erasing processes may be performed in a different atmosphere.

In the present invention, reproduction of recorded information is performed by utilizing a photoelectric or thermoelectric effect. In the case where the photoelectric effect is utilized, the reproduction can be performed by detecting directly as electric current the electrons generated by irradiating a predetermined energy beam onto the recording medium, or by detecting the electrons emitted to the exterior with a suitable detector such as an electrode and current amplifier or an electron detector. In the case where the thermoelectric effect is utilized, the thermoelectrons generated by heat caused by irradiation of the energy beam is detected in the same manner as described above so that the reproduction can be performed.

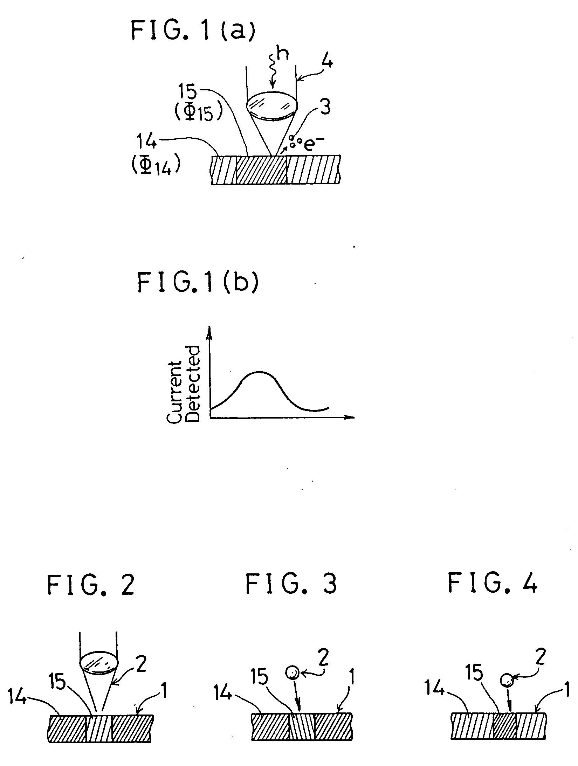

The preferred embodiments of the invention will now be described with reference to Fig. 1 through Fig. 13.

First, a recording method according to the method for recording and reproducing information of the invention is to be described.

As shown in Fig. 2, as an energy means 2 for causing work function variation, a laser beam, for example, is used. A Te alloy of TeSe, TeSb, TeSbAs, TeGeSb or the like, or an In alloy of InSe, InSeTlCo or the like is used as a recording medium 1. In this case, recording is performed by forming a local amorphous state portion as a work function varied portion 15 in contrast with a crystalline state portion having a non-varied work function as a non-varied work function portion 14. That is, recording is performed on the basis of a distribution pattern of the work function varied portion 15 caused by work function variation in accordance with a phase change of the recording medium 1.

In a recording method shown in Fig. 3, an electron beam is used as the energy means 2 for causing work function variation. In this method, as the recording medium 1, a material having a periodic structure portion or a crystalline state portion being the work function non-varied portion 14 having a homogeneous work function is used. In the recording medium 1, the aforesaid electron beam locally forms a multiple-defect introduced portion or an amorphous state portion being the work function varied portion 15. That is, a local structural change in the recording medium 1 brought about by the electron beam causes a local work function variation or together therewith a variation of an energy state density distribution so that recording of information can be performed. It is desirable to set an accelerating energy range of the electron beam from several- hundred eV to several-dozen KeV from the view point of recording speed or recording density.

Further, in a recording method shown in Fig. 4, an electron beam is used as the energy means 2 for causing work function variation. In this method, a material having an amorphous state portion or a short-term periodic structure portion which functions as the work function non-varied portion 14 having a homogeneous work function is used as the recording medium 1. Such a recording medium 1 is subjected to the irradiation of the aforesaid electron beam to be locally heated. Then by gradually lowering the electron beam energy, the recording medium is annealed to form a crystalline structure portion or a regular structure portion functioning as the work function varied portion 15. That is, information recording is performed in an almost reversed manner of the methods described with reference to Figs. 2 and 3. Note that in such a method the laser beam may be used instead of using the electron beam.

By combining the recording methods mentioned above with each other, the phase change or structural change between the work function non-varied portion 14 and the work function varied portion 15 can be caused reversibly and repeatedly so that recording again and erasing information can be performed on the recording medium 1.

In the recording methods above described, it may be possible to optimize the recording condition by monitoring the amount of electrons emitted from the portion where recording is performed, an energy distribution, or a state of infrared ray generation caused by heat, to detect a state change of the recording medium.

To be described next are reproducing methods. As shown in Fig. 1 (a), a laser beam as an energy means 4 for causing electrons 3 to be emitted is converged onto the recording medium 1. The difference in amount of electrons 3 emitted between from the work function non-varied portion 14 and from the work function varied portion 15 is detected as intensity variation of electric current representing a distribution pattern of the work function varied portion 15, whereby information is reproduced. As the energy means, besides the aforesaid laser beam, any other electromagnetic wave including an X ray,an ultraviolet ray or the like, a charged particle beam including an electron beam, an ion beam or the like, or a neutral particle beam may be used. In the case where a particle beam is used, it is desirable to select a particle having a low reactivity, for example, a particle of an inert element or the like in order to minimize influence on the recording medium 1.

Here, it is assumed that a work function at the work function non-varied portion 14 is Φ₁₄ and at the work function varied portion, Φ₁₅. Generally, applying light (energy) of hν > Φ (h: Planck's constant, ν: frequency) to the surface of a material of work function Φ causes electrons having been given energy from the surface of the material to be emitted to the exterior. Also, it is known that a slight current is generated because of a tunnel effect even in the case of hν < Φ . Accordingly, when the recording medium 1 is scanned by reference light ν_{R} of Φ₁₄ = hν ₁₄ < hν_{R} < Φ₁₅ = hν₁₅, it becomes Φ₁₄ < hν_{R} at the work function non-varied portion 14 so that electrons are emitted, whereas it becomes hν_{R} < Φ₁₅ at the work function varied portion 15 so that electrons are rarely emitted. Detecting the electrons 3 emitted at this moment and difference in current intensity of the electrons makes it possible to read information from the recording medium 1.

In the case where the light does not meet to the aforesaid requirements, another light ν_{R1} of Φ₁₄ < Φ₁₅ < hν_{R1}, or reference light ν_{R2} of Φ₁₄ > Φ₁₅ > hν_{R2} may be used. In this case, the electrons 3 are emitted from both the work function non-varied portion 14 and the work function varied portion 15. However, since there is a difference in amount of the emitted electrons 3 between the two portions, a distribution pattern of the work function varied portion can be detected on the basis of this difference so that information can be reproduced.

In the case where a material having a good conductivity like a metal is used for the electron emitting source (recording medium), the amount of emitted electrons 3 is dominated mainly by work function, whereas, in the case where a material like a semiconductor having an electron band gap is used as a recording medium, a local density of states thereof also affects the amount of emitted electrons. In this case, it is possible to reproduce information on the basis of an energy distribution of the emitted electrons.

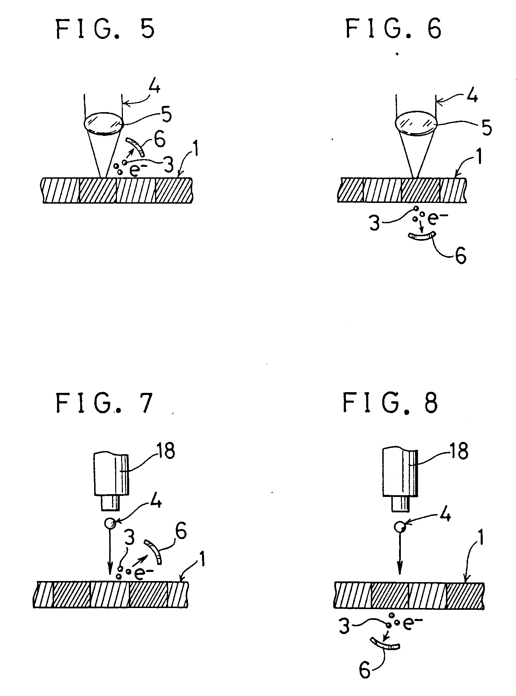

Figs. 5 and 6 illustrate embodiments in which an electromagnetic wave such as a laser beam or the like is used as the energy means 4 for reproducing information. The laser beam is converged onto the recording medium 1 by means of an object lens (another optical means such as a diffraction grating, a mirror or the like may be used.) so that the electrons 3 are emitted from a portion to which energy is concentrated. Among the electrons 3 when the electrons emitted from the upper surface of the recording medium 1 are to be detected, a detector 6 is disposed above the recording medium 1, in contrast therewith, when the electrons emitted from the lower surface of the recording medium are to be detected, the detector 6 is disposed therebelow. Here, on the assumption that reproduction is performed in an atmospheric air, it is desirable to dispose the detector 6 within 10 µm close to a readout portion of the recording medium 1. Also, in order to assure a high efficiency of detection, voltage is desirably applied to keep the potential at the detector positive relative to the recording medium 1. Especially, in the case where a material of good conductivity is used for the recording medium 1, if the potential at the detector 6 is maintained in the range from about + 10 mV to about + 50 V, a good result can be obtained with respect to noise or intensity of a regenerative signal. When reproduction is performed in any other atmosphere or in a vacuum, or when a material of poor conductivity is used for the recording medium 1, the efficiency of detection can also be improved by setting conditions according to each situation.

In the reproducing method shown in Fig. 6, since the electrons 3 are detected behind the side to which the laser is applied, a thickness of the recording medium 1 also affects the efficiency of detection. In this case, the preferable thickness of the recording medium 1, which depends on the material to be used therefor, is generally same as or below the depth to which the laser beam reaches. That is, the greater the thickness of the recording medium becomes, the more it is difficult for the laser beam to reach the lower surface of the recording medium 1, resulting in decrease in exponential grade of a quantity of light. On the other hand, when the thickness decreases too much, most of the laser transmits through the medium without exciting electrons, also the electron emitting area becomes smaller so that the amount of electrons 3 to be detected decreases.

In such a case, disposing the detector 6 on both sides of the recording medium to detect electrons 3 emitted upwardly and downwardly enables the efficiency of detection to be more improved.

In Figs. 7 and 8, a charged particle beam such as an electron beam, an ion beam or the like is used as the energy means 4 for irradiating onto the recording medium instead of using a laser beam in order to emit the electrons 3. In this case, the incident energy of the charged particle beam can be considered to be the energy hv of the laser beam as aforementioned. In an atmospheric air or a specific gas, an effective distance of the charged particle beam depends greatly on an average free path in each atmosphere. Thus, the distance from a charged particle beam source 18 to the recording medium 1 is preferably determined by referring to the aforesaid average free path. For example, when reproduction is performed in an atmospheric air by using the electron beam, it is desirable to set the aforesaid distance between the beam source 18 and the recording medium 1 from 0.001 µm to 1 µm, and beam accelerating voltage approximately 1 V to 500 V. When the electron beam is used, voltage is applied to keep the potential at the recording medium 1 positive relative to that at the beam source 18, whereas when the particle beam having positive charge is used, negative potential is to be kept at the recording medium 1. In the aforesaid cases, as is the case of the reproducing method using the laser beam, the emitted electrons 3 can be detected by the detector 6 disposed above the upper surface or below the lower surface of the recording medium 1, or disposed on both sides. Also, like the reproducing method using the laser beam, the same condition setting such as keeping positive potential at the recording medium 1, the position of the detector 6, the applied voltage, or the like is required.

In the embodiment shown in Fig. 7, when the negatively charged particle beam such as the electron beam or the like is used, since the detector 6 and the beam source 18 are located in the same side relative to the recording medium 1, moreover since positive potential is kept at both the detector 6 and the recording medium 1 relative to the beam source 18, a part of the particle beam cannot be converged normally on the surface of the recording medium 1 by influence of an electric field caused by the detector 6, also the particle beam may enter the detector 6 to generate noise. Therefore, in such a case, it is desirable that potential at the recording medium 1 be kept from + 1 V to + 100 V relative to the beam source 18, while the applied voltage to the detector 6 is set 0.01 V to 10 V, that is 1/10 to 1/100 of the applied voltage to the recording medium 1, so that the difference in applied voltage between the recording medium 1 and the detector 6 can be provided.

In the embodiments described above with reference to Figs. 5 through 8, it is possible to apply the light beam or particle beam as the energy means 4 with a predetermined incident angle relative to the surface of the recording medium 1. However, since a smaller diameter of the converged spot of the beam allows improvement in recording density, it is desirable to apply the beam perpendicularly to the surface of the recording medium 1. Also, the laser beam having a long wave length or the particle beam having lower energy being applied to heat the recording medium 1 to the extent that structure thereof will not be changed, reproducing information can be performed on the same principle as above by detecting the electrons 3 emitted from the recording medium 1 by thermal excitation in order to read the work function variation.

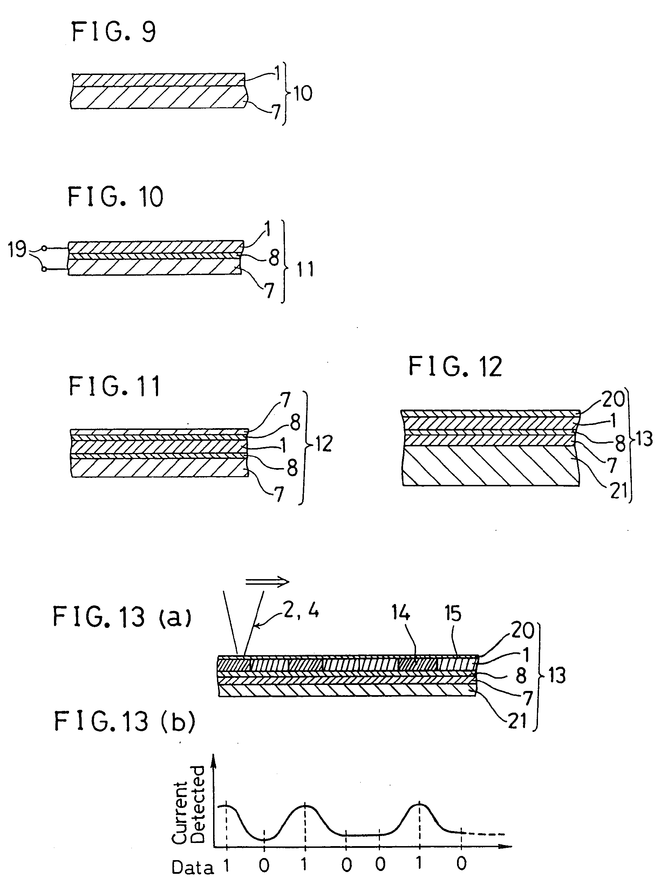

To be described next are recording devices to be used in the methods for recording and reproducing information described above. As shown in Fig. 9, the recording device 10 comprises, for example, the recording medium 1 for recording information and a detecting layer 7 consisting of Al, Au, Pt, or the like for detecting the regenerative signals when reproducing the recorded information. With this, the regenerative signals can be detected directly from the recording medium 1 without necessitating a separate detector provided outside of the device 10. By providing the recording device 10 of such a construction in the form of a disc, tape, or card, it becomes possible to make use of a conventional reproducing apparatus of optical disc. Also, by providing a protective layer covering overall surface of the device to protect from deterioration of the recording device 10 and from the effect of a gaseous substance in an atmosphere, preservation and handling of the recording device 10 become simplified.

In a recording device 11 shown in Fig. 10, an intermediate layer 8 consisting of an insulating layer of SiO₂, SiN, Al₂O₃ AlN or the like is formed between the recording medium 1 and the detecting layer 7 in order to protect from performance deterioration of the recording medium 1 caused by diffusion of the elements constituting the detecting layer 7 into the recording medium 1 and reversed phenomenon thereof. In this case, when aforesaid reproducing methods shown in Figs. 6 and 8 are performed, that is, when the detector 6 is provided behind the side to which the beam is applied, it is preferable to set the thickness of the recording medium 0.001 µm to 5 µm, that of the intermediate layer 8 (insulating layer) 0.001 µm to 0.1 µm, and that of the detecting layer more than 0.1 µm. As well, lead electrodes 19,19 are mounted to the recording medium 1 and the detecting layer 7 so that voltage can be applied respectively to enhance the convergent performance of the beam, whereby improvement can be made in detection efficiency. In contrast, when reproducing methods shown in Fig. 5 and 7 are performed, since the beam is required to transmit through the detecting layer 7 and the intermediate layer 8 to reach the recording medium 1, it is desirable that the thickness of the detecting layer 7 be below 0.1 µm, and that of the intermediate layer 8 approximately 0.001 µm to 0.01 µm.

A recording device 12 shown in Fig. 11 comprises the detecting layers 7,7 and the intermediate layers 8,8 on both sides of the recording medium 1 in order to improve detection efficiency thereof. In this case, it is desirable to apply the thickness conditions of the layers described with reference to Fig. 10 to the detecting layers 7,7 and the intermediate layers 8,8, respectively.

With reference to Figs 10 and 11, when recording is performed on the basis of work function variation by generating a structure change by means of the beam heat, it is desirable to use an oxide or nitride, for example, Si - O, Si - N, or Al - O, Al - N, not giving a bad influence on the recording medium 1 or the detecting layers 7,7 by causing thermal diffusion or the like in the intermediate layers 8,8.

Fig. 12 illustrates a recording device 13 provided in a form of disc, tape, or card for recording and reproducing information by means of a laser beam, an X ray, an ultra violet ray, or the like. The recording device 13 is provided with a protective layer 20 made of an acrylate UV setting resin, silicone coating material, unsaturated polyester resin, or the like for protecting against flaw and dust caused from the exterior, being formed as the first layer to the beam. Subsequently provided are the recording medium 1, the intermediate layer 8, the detecting layer 7 sequentially, and at the bottom, a glass substrate 21 serving as both a substrate and a protecting layer. When the beam to be used can transmit through the glass substrate 21 like an electromagnetic wave such as light or the like, it is possible to reproduce information by applying the beam incident from the side of the glass substrate 21.

Fig. 13(a) shows the case where recording, reproducing, or erasing information is performed by using the recording device 13. When the recording device 13 is in a form of a disc to record or reproduce information, a row of aforesaid work function non-varied portion 14 and work function varied portion 15 is formed in concentric or spiral shape to be detected, by moving or rotating either of the energy means 2,4 or the recording device 13, or both. When erasing, work function non-varied portion is to be formed. In the case where the recording device 13 is in a form of tape or card, by moving either of the energy means 2,4 or the recording device 13, or both, a row of the work function non-varied portion 14 and the work function varied portion 15 is linearly formed (recording), and then detected (reproducing). To erase the record, the work function non-varied portion is to be formed (erasing) in a straight line. In this case, output of the energy means 2 is modulated on the basis of a pattern according to information to be recorded when recording. In contrast, when reproducing, current intensity variation according to a distribution pattern of aforesaid work function non-varied portion 14 and the work function varied portion 15 is detected by the detecting layer 7. Then the current intensity variation having been detected is subjected to a binary-coded sampling using an appropriate threshold value, whereby data represented by 1 and 0 can be obtained (Fig. 13(b)).

### EXAMPLE

The recording device 13 as shown in Fig.12 was obtained by laminating on the glass substrate 21 an Au film (the detecting layer 7) of approximately 100 nm thick, a SiO₂ film (the intermediate layer 8) of approximately 30 nm thick, an InSbTe film (the recording medium 1) of approximately 50 nm thick, and a SiO₂ film (the protective layer 20) in this order by sputtering method.

Recording was performed by applying the laser beam produced by a semiconductor laser means of 830 nm wave length, approximately 40 mW of maximum power, from the side of the protective layer 20. A laser beam of 15 mW (flux: 1.0 µm) is applied onto the crystallized InSbTe film 1 to be rendered partially amorphous for recording information. It was confirmed that this amorphous portion was recrystallized reversibly by applying a laser beam of 10 mW.

Thus, recording information was performed on the basis of a distribution pattern of the amorphous and crystallized portion, followed by grounding of the detecting layer 7, then applying voltage of + 5 V to the recording medium from exterior. In keeping this state, an Ar laser beam was converged (flux: 1.0 µm) by means of a lens, then irradiated from the protective layer 20 side to the InSbTe film 1 under scanning, whereby a slight current intensity variation corresponding to aforesaid distribution pattern shown in Fig. 13(b) could be detected.

## Claims

1. A method for recording and reproducing information comprising:
irradiating an energy beam (2) onto a recording medium (1), the recording medium being made of a material whose work function can vary according to a structural change thereof caused by the irradiation of the energy beam, to locally vary a work function of said medium so as to record a distribution pattern of portions (15) of the medium whose work function is varied and portions (14) of the medium whose work function is not varied, said distribution pattern corresponding to the information to be recorded;
detecting the distribution pattern on the basis of a difference in photoelectric or thermoelectric effect between the work function varied portions (15) of the medium and the work function non-varied portions (14) of the medium; and
reproducing the recorded information from said detected difference.

2. The method of claim 1 in which the recording medium is made of a material which can reversibly undergo crystalline-amorphous phase change.

3. The method of claim 1 in which the recording medium is made of Te alloy such as TeSe, TeSb, TeSbAs, TeGeSb, TeGeAs, TeSbIn or TeBi.

4. The method of claim 1 in which the recording medium is made of In alloy such as InSe or InSeTlCo.

5. The method of claim 1 in which the energy beam is an electron beam.

6. The method of claim 5 in which the electron beam has an accelerating voltage of approximately 1 to 500 V.

7. The method of claim 1 in which the energy beam is an electromagnetic wave.

8. The method of claim 7 in which the energy beam is a laser beam.

9. The method of claim 1 in which the recording medium is maintained at a positive potential by voltage application.

10. The method of claim 1 in which said distribution pattern is provided as a row in concentric, spiral or linear form in the recording medium.

11. The method of claim 1 in which the recording medium is provided on a recording device (10;11;12;13) which comprises a lamination of a detecting layer (7) and the recording medium, the detecting layer being capable of detecting electrons emitted from the recording medium.

12. The method of claim 11 in which the detecting layer is made of an electroconductive material such as Al, Au or Pt.

13. The method of claim 11 in which the recording device further comprises an insulating layer (8) between the recording medium and the detecting layer.

14. The method of claim 13 in which the insulating layer is made of SiO₂, SiN, Al₂O₃ or AlN.

## Patentansprüche

1. Verfahren zum Aufzeichnen und zur Wiedergabe von Information, umfassend:
Richten eines Energiestrahls (2) auf ein Aufzeichnungsmedium (1), das aus einem Material hergestellt ist, dessen Austrittsarbeit sich entsprechend einer Strukturänderung desselben verändern kann, die durch Einstrahlung des Energiestrahls verursacht wird, um lokal eine Austrittsarbeit des Mediums derart zu verändern, daß ein Verteilungsmuster von Abschnitten (15) des Mediums mit veränderter Austrittsarbeit und Abschnitten (14) des Mediums mit unveränderter Austrittsarbeit aufgezeichnet wird, wobei das Verteilungsmuster der aufzuzeichnenden Information entspricht;
Detektieren des Verteilungsmusters auf der Grundlage einer Differenz des fotoelektrischen oder thermoelektrischen Effektes zwischen den Abschnitten (15) des Mediums mit veränderter Austrittsarbeit und den Abschnitten (14) des Mediums mit unveränderter Austrittsarbeit; und
Wiedergabe der aufgezeichneten Information mittels der detektierten Differenz.

2. Verfahren nach Anspruch 1, dadurch gekennzeichnet, daß das Aufzeichnungsmedium aus einem Material hergestellt ist, das einen kristallin-amorphen Phasenübergang reversibel vollziehen kann.

3. Verfahren nach Anspruch 1, dadurch gekennzeichnet, daß das Medium aus einer Te-Legierung, wie z.B. TeSe, TeSb, TeSbAs, TeGeSb, TeGeAs, TeSbIn oder TeBi herstellt ist.

4. Verfahren nach Anspruch 1, dadurch gekennzeichnet, daß das Aufzeichnungsmedium aus einer In-Legierung, wie beispielsweise InSe oder InSeTlCo hergestellt ist.

5. Verfahren nach Anspruch 1, dadurch gekennzeichnet, daß der Energiestrahl ein Elektronenstrahl ist.

6. Verfahren nach Anspruch 5, dadurch gekennzeichnet, daß der Elektronenstrahl eine Beschleunigungsspannung von ca. 1 bis 500 V besitzt.

7. Verfahren nach Anspruch 1, dadurch gekennzeichnet, daß der Energiestrahl eine elektromagnetische Welle ist.

8. Verfahren nach Anspruch 7, dadurch gekennzeichnet, daß der Energiestrahl ein Laserstrahl ist.

9. Verfahren nach Anspruch 1, dadurch gekennzeichnet, daß das Aufzeichnungsmedium durch Anlegen einer Spannung auf einem positiven Potential gehalten wird.

10. Verfahren nach Anspruch 1, dadurch gekennzeichnet, daß das Verteilungsmuster als eine Reihe in konzentrischer, spiralförmiger oder linearer Form auf dem Aufzeichnungsmedium vorgesehen ist.

11. Verfahren nach Anspruch 1, dadurch gekennzeichnet, daß das Aufzeichnungsmedium auf einer Aufzeichnungseinrichtung (10; 11; 12; 13) vorgesehen ist, die ein Laminat aus einer Detektorschicht (7) und dem Aufzeichnungsmedium umfaßt, wobei die Detektorschicht Elektronen detektieren kann, die von dem Aufzeichnungsmedium emittiert werden.

12. Verfahren nach Anspruch 11, dadurch gekennzeichnet, daß die Detektorschicht aus einem elektrisch leitenden Material, wie beispielsweise Al, Au oder Pt, hergestellt ist.

13. Verfahren nach Anspruch 11, dadurch gekennzeichnet, daß die Aufzeichnungseinrichtung ferner eine Isolatorschicht (8) zwischen dem Aufzeichnungsmedium und der Detektorschicht aufweist.

14. Verfahren nach Anspruch 13, dadurch gekennzeichnet, daß die Isolatorschicht aus SiO₂, SiN, Al₂O₃ oder AlN besteht.

## Revendications

1. Procédé d'enregistrement et de reproduction d'informations, comprenant :
l'irradiation d'un support d'enregistrement (1) par un faisceau d'énergie (2), le support d'enregistrement étant formé d'un matériau dont le travail d'extraction peut varier avec un changement de structure provoqué par l'irradiation par le faisceau d'énergie, de manière qu'un travail d'extraction du support varie localement et permette l'enregistrement d'un diagramme de distribution de parties (15) du support dont le travail d'extraction a varié et de parties (14) du support dont le travail d'extraction n'a pas varié, le diagramme de distribution correspondant aux informations à enregistrer,
la détection du diagramme de distribution en fonction de la différence d'effet photoélectrique ou thermoélectrique entre les parties (15) dont le travail d'extraction a varié et des parties (14) dont le travail d'extraction n'a pas varié dans le support, et
la reproduction des informations enregistrées à partir de la différence détectée.

2. Procédé selon la revendication 1, dans lequel le support d'enregistrement est formé d'un matériau qui peut subir de manière réversible un changement de phase cristallin-amorphe.

3. Procédé selon la revendication 1, dans lequel le support d'enregistrement est formé d'un alliage de tellure tel que TeSe, TeSb, TeSbAs, TeGeSb, TeGeAs, TeSbIn ou TeBi.

4. Procédé selon la revendication 1, dans lequel le support d'enregistrement est formé d'un alliage d'indium tel que InSe ou InSeTlCo.

5. Procédé selon la revendication 1, dans lequel le faisceau d'énergie est un faisceau d'électrons.

6. Procédé selon la revendication 5, dans lequel le faisceau d'électrons a une tension accélératrice d'environ 1 à 500 V.

7. Procédé selon la revendication 1, dans lequel le faisceau d'énergie est une onde électromagnétique.

8. Procédé selon la revendication 7, dans lequel le faisceau d'énergie est un faisceau laser.

9. Procédé selon la revendication 1, dans lequel le support d'enregistrement est maintenu à un potentiel positif par l'application d'une tension.

10. Procédé selon la revendication 1, dans lequel le diagramme de distribution est sous forme d'une ligne de forme concentrique, spiralée ou rectiligne dans le support d'enregistrement.

11. Procédé selon la revendication 1, dans lequel le support d'enregistrement est placé sur un dispositif d'enregistrement (10 ; 11 ; 12 ; 13) qui comprend un empilement d'une couche de détection (7) et du support d'enregistrement, la couche de détection pouvant détecter des électrons émis par le support d'enregistrement.

12. Procédé selon la revendication 11, dans lequel la couche de détection est formée d'un matériau conducteur de l'électricité tel que Al, Au ou Pt.

13. Procédé selon la revendication 11, dans lequel le dispositif d'enregistrement comporte en outre une couche isolante (8) placée entre le support d'enregistrement et la couche de détection.

14. Procédé selon la revendication 13, dans lequel la couche isolante est formée de SiO₂, SiN, Al₂O₃ ou AlN.
